# EUROPÄISCHE PATENTSCHRIFT

(11) **EP 0 944 770 B1**
(45) Veröffentlichungstag und Bekanntmachung des Hinweises auf die Patenterteilung: **12.12.2001**
(21) Anmeldenummer: 97949935.7
(22) Anmeldetag: 13.11.1997
(51) Int. Cl.: F03B 3/12

(54) **WASSERTURBINE ODER -PUMPE**
WATER TURBINE OR WATER PUMP
TURBINE OU POMPE HYDRAULIQUE

(30) Priorität: 12.12.1996 DE 19651736
(43) Veröffentlichungstag der Anmeldung: 29.09.1999
(73) Patentinhaber: Keller, Andreas, 82491 Grainau (DE)
(72) Erfinder: Keller, Andreas, 82491 Grainau (DE)
(74) Vertreter: Lohrentz, Franz, Dipl.-Ing.
(86) Internationale Anmeldenummer: DE9702688
(87) Internationale Veröffentlichungsnummer: WO9826176

(56) Entgegenhaltungen:
- EP-A- 0 475 920
- EP-A- 0 512 190
- EP-A- 0 583 091
- FR-A- 2 459 378
- GB-A- 439 249
- US-A- 5 249 993
- US-A- 5 275 535

## Beschreibung

Die Erfindung betrifft eine Wasserturbine oder -pumpe mit einem Laufrad und einem Leitrad, die mit Laufschaufeln bzw. Leitschaufeln bestückt sind.

Wasserturbinen der Kaplan- oder Francis-Bauart und entsprechend gestaltete Wasserpumpen werden häufig in ihrer Funktion durch im Wasser mitgeführtes Laub, Gras, Plastikfetzen, Lumpen oder dergleichen beeinträchtigt. Diese im Wasser mitgeführten Teile setzen sich an den Anströmkanten der Laufschaufeln und der Leitschaufeln fest und stören daher die Umströmung des Querschnittprofils dieser Schaufeln erheblich. Dadurch sinkt der Wirkungsgrad zum Teil erheblich und bei Wasserpumpen führt das neben Durchflußminderungen zu einem starken Ansteigen der Leistungsaufnahme. Diese nachteiligen Auswirkungen machen sich besonders bemerkbar bei Wasserturbinen und Wasserpumpen der genannten Art, die von mittlerer oder kleiner Baugröße sind und bei denen folglich nicht nur die Abströmkanten, sondern auch die Anströmkanten, als Profilnase, verhältnismäßig scharf sind. Denn diese relativ scharfen Anströmkanten halten auch schon mitgeführte Fasern oder Laub relativ geringer Ausdehnung fest.

Um die Neigung der Schaufeln, vom Wasser mitgeführte Festkörper-Verunreinigungen festzuhalten, zu verringern oder ganz zu vermeiden, ist es bereits bekannt, die Anströmkanten der Lauf- und/oder Leitschaufeln in Strömungsrichtung gesehen nach hinten gekrümmt auszubilden (EP-A 475 920). Hierdurch sollen, im Unterschied zu den in der Regel weitgehend senkrecht zur Strömungsrichtung verlaufenden Anströmkanten, die Anströmkanten so bezüglich der Strömungsrichtung eingestellt sein, daß Strömungskomponenten auch parallel zu der Anströmkante wirksam sind und dadurch davon festgehaltene Fremdkörper abgeschwemmt werden. Bei Schaufeln, die bezüglich der Strömung unverstellbar sind, wie dies zum Beispiel bei Francis-Turbinen der Fall ist, ist eine entsprechende Gestaltung relativ leicht zu realisieren. Insbesondere bei in Abhängigkeit von der Strömung verstellbaren Laufschaufeln, wie dies bei Kaplanturbinen und entsprechend gestalteten Wasserpumpen der Fall ist, führt die vorgeschlagene Rückwärtskrümmung aber zu konstruktiven und betriebsmäßigen Nachteilen. So erfordern beispielsweise die Verstellbarkeit der Laufschaufeln einer Kaplanturbine um eine weitgehend radial zur Drehachse verlaufende Schaufelachse und die dadurch bedingte Veränderung der Lage der Schaufelspitze in Bezug auf das umgebende Gehäuse eine Anpassung derart, daß das Gehäuse im Verstellbereich der umlaufenden Schaufeln eine Teil-Torusform besitzt. Hierdurch sollen die Spaltverluste an der Schaufelspitze bei allen Stellpositionen der Laufschaufeln möglichst gering sein. Diese Torusgestaltung des Gehäuses ist am kleinsten, wenn die Anström- und Abströmkanten der Laufschaufeln ebenso wie die Verstellachse weitgehend radial zur Drehachse verlaufen. Durch die vorgeschlagene Rückwärtskrümmung der Lauf schaufeln würde jedoch bei einer Beibehaltung der weitgehend radialen Verstellachse ein erheblicher Schwenkweg der Schaufelspitze die Folge sein, der eine entsprechende Vergrößerung des torusförmigen Teils des Gehäuses zur Folge hat. Eine entsprechende Rückwärtsschwenkung der Verstellachse so, daß diese in ihrer Lage weitgehend auf den Verlauf der Anströmkante abgestimmt ist, erfordert jedoch eine Umkonstruktion des entsprechenden Antriebs in der Nabe und einen erheblich größeren Platzbedarf. Darüber hinaus werden die Schaufeln durch die Rückwärtskrümmung entsprechend länger und mithin der Materialaufwand und die auf die Schaufeln wirkende Belastung größer.

Weiterhin ist zum Zweck der angestrebten Selbstreinigung von Wasserturbinen und -pumpen auch bereits vorgeschlagen worden, zusätzlich zu den regulären Lauf- und/oder Leitschaufeln besondere Reinigungsschaufeln mit rückwärts gekrümmter Anströmkante anzuordnen und den regulären Schaufeln vorzuschalten (EP-A 512 190). Hierdurch soll erreicht werden, daß von der Strömung mitgeführte Festkörper-Verunreinigungen schon vor Erreichen der Anströmkanten der regulären Schaufeln durch die Reinigungsschaufeln erfaßt und aufgrund der Rückwärtskrümmung der Anströmkanten seitlich abgelenkt werden. Die Anordnung zusätzlicher Reinigungsschaufeln erfordert jedoch einen erheblichen Aufwand und läßt sich bei Turbinen und Pumpen mit verstellbaren Schaufeln ohne erhebliche Einschränkung des Verstellweges nicht realisieren.

Auch bei einer Axialkreiselpumpe, die zur Förderung von mit langfaserigen Beimengungen befrachteten Flüssigkeiten bestimmt ist, ist es bekannt, die Eintrittskante der Laufschaufeln mit einer von radial innen nach radial außen zunehmenden rückwärts gerichteten Krümmung zu versehen (DE-A 36 08 229). Die Krümmung ist so gewählt, daß an jedem Punkt der Eintrittskante die resultierende Kraft aus der auf ein Flüssigkeitsteilchen wirkenden Widerstandskraft und der Fliehkraft zumindest annähernd eine Tangente zu der Eintrittskante bildet. Im Ergebnis führt auch diese Ausbildung der Laufschaufel zu den vorstehend bereits geschilderten Nachteilen, die mit einer Rückwärtskrümmung einhergehen.

Ein ähnlicher Vorschlag für die Gestaltung der Laufschaufel von Kreiselmaschinen sieht vor, daß zumindest das äußerste, in radialer Richtung gemessene Viertel der Schaufeleintrittskante so entgegen der Drehrichtung geneigt ist, daß die Kante an dieser Stelle eine logarithmische Spirale beschreibt (DE-C 647 053). Hierdurch soll vermieden werden, daß bei starker Verunreinigung des Betriebswassers sich Gras, Laub und ähnliches Geschwemmsel an den Eintrittskanten der Laufschaufel festsetzt. Im einzelnen ist vorgeschrieben, daß in dem äußersten Viertel der Schaufeleintrittskante der Winkel zwischen der Tangente an die Eintrittskante und der Umfangsrichtung nicht größer als 40° sein soll. Das wirkt sich jedoch zumindest in dem äußeren Abschnitt der Laufschaufel wiederum in einer starken Rückwärtsneigung aus, die die gleichen Nachteile wie die vorstehend beschriebenen Vorschläge zur Folge hat.

Schließlich ist eine Kreiselpumpe zur Förderung von Papierpulpe bekannt, bei der die Eintrittskanten der Laufschaufeln in Strömungsrichtung rückwärts geneigt sind. Am äußeren Schaufelende bildet jede Eintrittskante eine Einbuchtung in Strömungsrichtung, die zur Gehäusewand hin durch eine flanschartige Verbreiterung begrenzt ist (US-A 22 02 790). Hierdurch soll erreicht werden, daß in der Pulpe mitgeführtes Fasermaterial durch den in Strömungsrichtung rückwärts geneigten Teil der Eintrittskante abgelenkt und in der Einbuchtung an der Schaufelkante gesammelt wird, um ein Eindringen in den Spalt zwischen Schaufelende und Gehäuse und ein dadurch bedingtes Blockieren der Pumpe zu vermeiden. Auch diese Gestaltung der Laufschaufel-Eintrittskante ergibt eine in Strömungsrichtung rückwärts geneigte Laufschaufel mit den vorstehend beschriebenen Nachteilen.

Für den Antriebspropeller eines Wasserfahrzeuges ist ein Vorschlag bekannt, zumindest die Vorderkante der Schaufeln mehrfach vorwärts und rückwärts geknickt auszubilden, so daß sie eine sägezahnförmig gezackte Kontur erhält (US-A 52 75 535). Somit weist die Vorderkante nur Kantenabschnitte auf, die jeweils schräg zur Strömungsrichtung verlaufen, ohne daß dadurch die Laufschaufel insgesamt schräg zur Strömungsrichtung angestellt ist. Hierdurch sollen Geräuschbildung und Neigung zur Kavitation reduziert werden, ohne daß die Schaufelfestigkeit beeinträchtigt wird. Die Neigung einer so gestalteten Schaufel, in verunreinigten Gewässern faserige Verunreinigungen aufzusammeln und festzuhalten, wird durch die gezackte Kantenkontur erheblich gesteigert.

Ein weiterer bekannter Vorschlag zur Gestaltung der Schaufelvorderkante eines Wasserfahrzeug-Propellers geht dahin, diese in Strömungsrichtung konkav gekrümmt auszuführen und die Schaufelfläche radial nach außen zu verringern, so daß sie in eine einen Kreisbogen bildende Spitze ausläuft (GB-A 439 249). Durch die kreisförmige Gestaltung des zu einer Spitze geformten äußeren Schaufelendes soll die Neigung der Schraube herabgesetzt werden, im Wasser befindliche Leinen oder Kabel zu erfassen.

Aufgabe der Erfindung ist es daher, die Schaufeln von Wasserturbinen oder -pumpen so auszubilden, daß der angestrebte Selbstreinigungseffekt auch bei Wasserturbinen oder -pumpen mit verstellbaren Schaufeln, insbesondere Laufschaufeln, ohne großen Aufwand erzielbar ist.

Erreicht wird dies erfindungsgemäß dadurch, daß die Anströmkanten und die Abströmkanten zumindest der Laufschaufeln einen entgegen der Strömungsrichtung vorspringenden Knick bilden.

Durch den Knick in der Anströmkante, der sich zum Beispiel in der Längsmitte der Anströmkante befindet, wird erreicht, daß die Anströmkante ausgehend von dem Knick zu beiden Enden der Schaufel hin bezüglich der Strömung nach hinten geneigt oder gekrümmt ist. Dadurch, daß von dem einen Schaufelende her, z. B. von der Schaufelbefestigung an der Laufradnabe, die Anströmkante zunehmend entgegen der Strömungsrichtung vorspringt, wird die anschließend an den Knick eintretende Rückwärtsneigung oder -krümmung bezüglich der Strömungsrichtung ausgeglichen. Somit wird die Lage der beiden Schaufelenden zueinander nicht oder unwesentlich gegenüber der entsprechenden Relativlage der Schaufelenden herkömmlicher Turbinen oder Pumpen mit weitgehend senkrecht zur Strömungsrichtung verlaufenden Anströmkanten verändert.

Da außerdem die Abströmkante parallel zu der Anströmkante einen Knick aufweist, werden die am Schaufelprofil wirksamen Strömungskräfte nicht verändert. Denn man kann sich die Schaufelquerschnitte als infinitesimal dünne Lamellen denken, die ausgehend von dem einen Schaufelende relativ zueinander zunehmend entgegen der Strömungsrichtung und ab dem Knick wieder zunehmend mit der Strömungsrichtung verschoben sind.

Die Anström- und Abströmkanten können geradlinig oder gekrümmt verlaufen, um den in ihrem Längsverlauf entstehenden Knick zu bilden. Der Winkel, mit dem die Anström- und Abströmkanten von der sonst üblichen, zur Strömungsrichtung weitgehend senkrechten Ausrichtung abweichen, sollte so groß sein, daß hinreichende Strömungskräfte an den auf die Anströmkanten auftreffenden Fremdkörpern zu erwarten sind, um diese abzuschwemmen. Er beträgt zweckmäßigerweise 10° bis 30°. Weiterhin können die Winkel, unter denen die zu beiden Seiten des Knickes verlaufenden Teile der Anströmkante gegenüber der Strömungsrichtung ausgerichtet sind, unterschiedlich sein. Anzustreben ist jedoch eine entsprechende Winkelgestaltung und darauf abgestimmte Lage des Knicks im Längsverlauf der Anströmkante so, daß die Relativlage der beiden Schaufelenden insbesondere bei varstellbaren Laufschaufeln sich nicht oder nur unwesentlich im Vergleich zu herkömmlichen Schaufeln ändert.

Ausführungsbeispiele der Erfindung sind nachfolgend anhand der beiliegenden Zeichnungen näher erläutert. In den Zeichnungen zeigen:
Fig. 1 einen Axialschnitt durch eine Strömungsmaschine mit hauptsächlich axialer Beaufschlagung des Laufrads, wobei in der linken Hälfte der Darstellung die Strömungsmaschine als Kaplanturbine und in der rechten Hälfte als entsprechend gestaltete Axialpumpe dargestellt ist, und
Fig. 2 eine schematische Draufsicht auf das Laufrad der Kaplanturbine gem. Fig. 1.

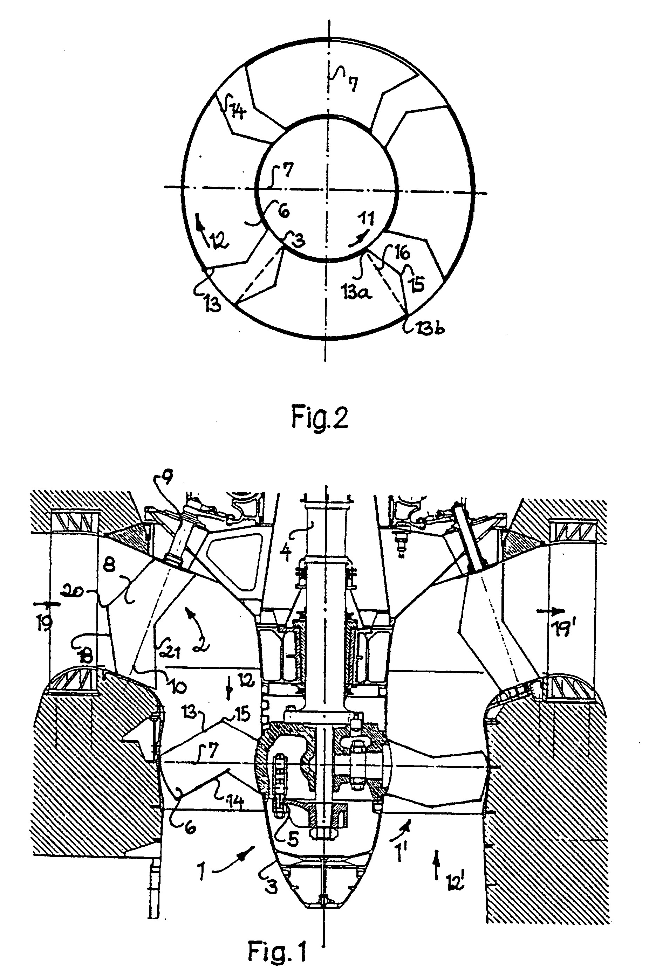

In der linken Hälfte der Fig. 1 ist eine Kaplanturbine dargestellt, die ein Laufrad 1 und ein feststehendes Leitrad 2 aufweist. Das Laufrad 1 ist mit einer Nabe 3 ausgestattet, an die eine zu einem nicht gezeigten Generator führende Welle 4 angeschlossen ist. Die Nabe 3 enthält eine bekannte und daher nicht im einzelnen dargestellte Verstellvorrichtung 5, die eine Verstellung der Laufschaufeln 6 um eine weitgehend radial gerichtete Verstellachse 7 ermöglicht.

Das Leitrad 2 enthält eine Anzahl von Leitschaufeln 8, die den zunächst seitlichen (radialen) Zustrom von Wasser axial und, je nach ihrer Einstellung, in Umfangsrichtung umlenken. Hierzu sind die Leitschaufeln 8 ebenfalls über eine Verstellvorrichtung 9 um eine Verstellachse 10 in bekannter Weise schwenkbar.

Wie aus Fig. 2 hervorgeht, weist das Laufrad 1 der Kaplanturbine 4 Laufschaufeln 6 auf und rotiert in Richtung des Pfeiles 11. Die Strömungsrichtung ist durch den Pfeil 12 gekennzeichnet und die Anströmkanten 13 sowie die Abströmkanten 14 der Laufschaufeln 6 weisen einen gegen diese Strömungsrichtung gerichteten Knick 15 auf. Die Anströmkanten 13 verlaufen ausgehend von ihrem der Nabe 3 am nächsten liegenden Punkt 13a geradlinig und schräg zur Strömungsrichtung 12 zu dem Knick 15 hin, der somit stromauf von dem Ausgangspunkt an der Nabe 3 liegt. Von dem Knick 15 an verläuft die Anströmkante wiederum geradlinig und schräg zur Strömungsrichtung 12, jedoch mit der Strömungsrichtung, so daß der an der Schaufelspitze liegende Punkt 13b der Anströmkante 13 und der der Nabe 3 nächstliegende Punkt 13a der Anströmkante auf einer weitgehend radial verlaufenden, gestrichelt gezeichneten Linie 16 liegen. Die Linie 16 entspricht im wesentlichen der radial verlaufenden Anströmkante herkömmlicher Kaplanturbinen.

Die Abströmkanten 14 verlaufen parallel zu den Anströmkanten 13, so daß das Querschnittsprofil jeder Laufschaufel 6, abgesehen von dem Knickverlauf, dem Querschnittsprofil herkömmlicher Kaplanturbinen gleich ist.

Die Anströmkanten 18 der Leitschaufeln 8 weisen analog zu den Laufschaufeln 6 einen entgegen der örtlichen Strömungsrichtung (Pfeil 19) vorspringenden Knick 20 auf, von dem aus die Anströmkante 18 zu den Schaufelenden hin rückwärts geneigt verläuft. Die Abströmkanten 21 verlaufen parallel zu den Anströmkanten 18. Bezüglich des Verlaufes der Anströmkanten 18 gegenüber der Strömungsrichtung gilt das für die Laufschaufeln 6 entsprechend gesagte.

Die in der rechten Hälfte der Fig. 1 dargestellte Ausgestaltung der Strömungsmaschine als Pumpe unterscheidet sich im Prinzip von der der beschriebenen Kaplanturbine nur durch die entgegengesetzten Strömungsrichtungen 12' bzw. 19' und die dementsprechend bei gleicher Drehrichtung geänderte Lage von Anström- und Abströmkanten. Aus diesem Grund gelten die vorstehenden Erläuterungen im Zusammenhang mit der Kaplanturbine hier entsprechend.

In den vorstehend beschriebenen Ausführungsbeispielen ist der an den Laufschaufeln bzw. Leitschaufeln vorgesehene Knick weitgehend in Längsmitte der Anströmkanten bzw. Abströmkanten angeordnet. Dem entspricht ein zu beiden Seiten des jeweiligen Knicks gleicher Winkelverlauf der Kanten bezüglich der Strömungsrichtung. Insbesondere bei Wasserturbinen und -pumpen, die mit einer höheren Drehzahl umlaufen und an deren Laufschaufeln daher eine merkliche Zentrifugalkraft wirksam ist, kann daran gedacht werden, den jeweiligen Knick näher zu der Laufradnabe hin zu verlegen. Das Bestreben, die Lage der Schaufelspitzen im Vergleich zu herkömmlichen Turbinen oder Pumpen weitgehend unverändert zu erhalten, führt in diesem Fall dazu, daß der Anstellwinkel der Anströmkante bzw. Abströmkante relativ zur Strömungsrichtung in dem Bereich, der sich zwischen der Laufradnabe und dem Knick befindet, größer als außerhalb des Knicks ist. Das ergibt eine stärkere Strömungskomponente in Längsrichtung der Anströmkante, durch welche die entgegenwirkende Zentrifugalkraft ausgeglichen wird.

Durch die im Vergleich mit herkömmlichen Turbinen oder Pumpen weitgehend beibehaltene Lage der Schaufelspitze der Laufschaufeln kann die Ausbildung eines Teil-Torus am Gehäuse ebenfalls unverändert bleiben. Somit erweist sich der Erfindungsgedanke besonders vorteilhaft für Wasserturbinen oder -pumpen mit verstellbaren Laufschaufeln, ist jedoch in seiner Anwendbarkeit nicht darauf beschränkt.

## Patentansprüche

1. Wasserturbine oder -pumpe mit einem Laufrad (1,1') und einem Leitrad (2), die Laufschaufeln (6) bzw. Leitschaufeln (8) aufweisen,
**dadurch gekennzeichnet,**
**daß** die Anströmkanten (13,18) und die Abströmkanten (14,21) zumindest der Laufschaufeln (6) einen entgegen der Strömungsrichtung (12,19;12',19') vorspringenden Knick (15,20) bilden und ausgehend von dem Knick bis zu beiden Enden der Schaufeln bezüglich der Strömungsrichtung rückwärts geneigt sind.

2. Wasserturbine oder -pumpe nach Anspruch 1,
**dadurch gekennzeichnet,daß** der Knick angenähert in Längsmitte der Kantenlänge liegt.

3. Wasserturbine oder -pumpe nach Anspruch 1 oder 2,
**dadurch gekennzeichnet,**
**daß** die Anström- und Abströmkanten (13,14;18,21) zu dem Knick (15,20) hin und von diesem weg geradlinig oder gekrümmt verlaufen.

4. Wasserturbine oder -pumpe nach einem der Ansprüche 1 bis 3, **dadurch gekennzeichnet,**
**daß** der von den beidseits des Knickes (15,20) befindlichen Teilen der Anströmkanten (13,18) bzw. Abströmkanten (14,21) gebildete Winkel relativ zu der Strömungsrichtung (12,19;12',19') gleich ist.

5. Wasserturbine oder -pumpe nach einem der Ansprüche 1 bis 4, **dadurch gekennzeichnet,**
**daß** die Laufschaufeln (6) um eine im wesentlichen radial zu der Drehachse des Laufrads (1) gerichtete Achse (7) schwenkbar sind.

6. Wasserturbine oder -pumpe nach Anspruch 5,
**dadurch gekennzeichnet,**
**daß** der der Nabe (3) des Laufrads (1) nächstliegende Punkt (13a) der Anström- bzw. Abströmkante und der an der Schaufelspitze liegende Punkt (13b) der Anström- bzw. Abströmkante jeweils auf einer annähernd radial zur Drehachse des Laufrads gerichteten Linie (16) liegen.

## Claims

1. Water turbine or water pump having a rotor (1, 1') and a stator (2), which respectively have rotor blades (6) and guide vanes (8), **characterized in that** the leading edges (13, 18) and the trailing edges (14, 21) of at least the rotor blades (6) form an elbow which projects in the opposite direction to the direction of flow (12, 19; 12', 19') and, starting from the elbow, are inclined backwards, with respect to the direction of flow, all the way to both ends of the blades or vanes.

2. Water turbine or water pump according to Claim 1, **characterized in that** the elbow lies approximately in the longitudinal centre of the length of the edge.

3. Water turbine or water pump according to Claim 1 or 2, **characterized in that** the leading and trailing edges (13, 14; 18, 21) run in a straight line or in a curve towards the elbow (15, 20) and away from the latter.

4. Water turbine or water pump according to one of Claims 1 to 3, **characterized in that** the angle relative to the direction of flow (12, 19; 12', 19')which is formed by those parts of the leading edges (13, 18) or trailing edges (14, 21) which are situated on both sides of the elbow (15, 20) is identical.

5. Water turbine or water pump according to one of Claims 1 to 4, **characterized in that** the rotor blades (6) can be pivoted about an axis (7) which is oriented substantially radially with respect to the axis of rotation of the rotor (1).

6. Water turbine or water pump according to Claim 5, **characterized in that** that point (13a) of the leading or trailing edge which is closest to the hub (3) of the rotor (1) and that point (13b) of the leading or trailing edge which lies at the blade or vane tip each lie on a line (16) which is oriented approximately radially with respect to the axis of rotation of the rotor.

## Revendications

1. Turbine ou pompe hydraulique, du type comportant une roue menée (1, 1') et une roue menante (2), qui portent des ailettes (6) et des ailettes (8), **caractérisée en ce que** les arêtes amont (13, 18) et les arêtes aval (14, 21) au moins des ailettes (6) forment un coude saillant (15, 20) vis-à-vis de la direction du courant (12, 19 ; 12', 19') et sont inclinées vers l'arrière depuis le coude jusqu'aux deux extrémités de l'ailette par rapport à la direction du courant.

2. Turbine ou pompe hydraulique selon la revendication 1, **caractérisée en ce que** le coude est situé approximativement dans la région médiane longitudinale de la longueur de l'arête.

3. Turbine ou pompe hydraulique selon la revendication 1 ou 2, **caractérisée en ce que** les arêtes amont et aval (13, 14 ; 18, 21) s'étendent de manière rectiligne ou recourbée, en se rapprochant du coude (15, 20) et en s'en éloignant.

4. Turbine ou pompe hydraulique selon l'une des revendications 1 à 3, **caractérisée en ce que** l'angle formé par les portions des arêtes amont (13, 18) et des arêtes aval (14, 21) se trouvant de chaque côté du coude (15, 20) est égal par rapport à la direction du courant (12, 19 ; 12', 19').

5. Turbine ou pompe hydraulique selon l'une des revendications 1 à 4, **caractérisée en ce que** les ailettes (6) peuvent basculer autour d'un axe (7) orienté sensiblement radialement par rapport à l'axe de rotation de la roue menante (1).

6. Turbine ou pompe hydraulique selon la revendication 5, **caractérisée en ce que** le point (13a) de l'arête amont et de l'arête aval situé le plus près du moyeu (3) de la roue menante (1), et le point (13b) de l'arête amont et de l'arête aval situé le plus près de la pointe de l'ailette sont situés chacun sur une ligne (16) orientée approximativement radialement par rapport à l'axe de rotation de la roue menante.
